# EUROPÄISCHE PATENTANMELDUNG

(11) **EP 2 479 514 A2**
(43) Veröffentlichungstag der Anmeldung: **25.07.2012**
(21) Anmeldenummer: 12151144.8
(22) Anmeldetag: 13.01.2012
(51) Int. Cl.: F24J 2/52, H01L 31/042, H01L 31/048

(54) **Vorrichtung zur Anordnung von Anbauteilen an an bzw. auf einer Unterkonstruktion befestigten Dach-, Wand- und Fassadenelementen**

(30) Priorität: 24.01.2011 DE 102011003026
(71) Anmelder: Fischer Profil GmbH, 57250 Netphen (DE); SCHÜCO International KG, 33609 Bielefeld (DE)
(72) Erfinder: Kinast, Harald, 57250 Netphen (DE); Sisterhenn, Daniela, 33699 Bielefeld (DE)
(74) Vertreter: advotec.

(57) **Zusammenfassung**

Die Erfindung betrifft eine Vorrichtung (1) zur Anordnung von Anbauteilen an an bzw. auf einer Unterkonstruktion befestigten Dach-, Wand und Fassadenelementen (2), wobei die Dach-, Wand- und Fassadenelemente vorzugsweise als Sandwichelemente mit einem Kern aus Kunststoff-Hartschaum oder Mineralwolle, einer profilierten Außenschale (3) aus Stahlblech und einer profilierten oder glatten Innenschale aus Stahlblech ausgebildet sind, wobei die Vorrichtung (1) aus mindestens einer sich vorzugsweise über die gesamte Länge des Sandwichelementes erstreckenden Aufnahmeschiene (4) besteht, die gemeinsam mit dem jeweiligen Sandwichelement mittels deren Befestigungsschrauben (6) an der Unterkonstruktion verschraubt ist, wobei in bzw. auf die Aufnahmeschiene (4) mindestens ein mit dem jeweiligen Anbauteil verbundenes Halteelement (5) ein- bzw. aufsetzbar ist, das in Längsrichtung der Aufnahmeschiene (4) kraft- und/oder formschlüssig gehalten ist und eine Abdeckung für die Befestigungsschrauben (6) bildet.

## Beschreibung

Die Erfindung betrifft eine Vorrichtung zur Anordnung von Anbauteilen an an bzw. auf einer Unterkonstruktion befestigten Dach-, Wand- und Fassadenelementen, wobei die Dach-, Wand- und Fassadenelemente vorzugsweise als Sandwichelemente mit einem Kern aus Kunststoff-Hartschaum oder Mineralwolle, einer profilierten Außenschale aus Stahlblech und einer profilierten oder glatten Innenschale aus Stahlblech ausgebildet sind.

Anbauteile, wie beispielsweise Solarmodule oder sonstiges werden bisher an Dach-, Wand- und Fassadenelementen mittels Haltevorrichtungen befestigt, die mit gesonderten Schrauben o.dgl., die die Dach-, Wand- und Fassadenelemente komplett durchdringen, mit der jeweiligen Unterkonstruktion verbunden werden. Diese gesonderten Schraubenverbindungen müssen, wie auch die Schraubenverbindungen für die Dach-, Wand- und Fassadenelemente, mit einer Dichtung versehen werden, damit ein Eindringen von Nässe und Feuchtigkeit in das Innere der mit den Dach-, Wand- und Fassadenelementen versehenen Hallen, Gebäude o. dgl. auch im Bereich der gesonderten Schraubenverbindungen vermieden wird.

Aufgrund von Witterungseinflüssen, insbesondere von Sonneneinstrahlungen weist die vorerwähnte Abdichtung jedoch eine relativ geringe Dauerhaltbarkeit auf, so dass in der Regel nach einer gewissen Zeit Undichtigkeit in Bereich der Schrauben auftreten.

Der Erfindung liegt die Aufgabe zugrunde, eine Vorrichtung der angegebenen Gattung zu schaffen, mit der die Befestigung von Anbauteilen an als Sandwichelemente ausgebildete Dach-, Wand- und Fassadenelemente schnell, einfach und ohne zusätzliches Bohren möglich ist und mit der gleichzeitig eine Abdeckung der Befestigungsschrauben für insbesondere die Dachelemente bereitgestellt wird, wobei auch die Anzahl von eventuell auftretenden undichten Stellen verringert ist.

Diese Aufgabe wird erfindungsgemäß mit den Kennzeichnungsmerkmalen des Patentanspruchs 1 gelöst.

Zweckmäßige Weiterbildungen der Erfindung sind in den Unteransprüchen gekennzeichnet.

Die erfindungsgemäße Vorrichtung besteht aus mindestens einer sich vorzugsweise über die gesamte Länge des Sandwichelementes erstreckenden Aufnahmeschiene, die gemeinsam mit dem jeweiligen Sandwichelement mittels deren Befestigungsschrauben an der Unterkonstruktion verschraubt ist, wobei in bzw. auf die Aufnahmeschiene mindestens ein mit dem jeweiligen Anbauteil verbundenes Halteelement ein- bzw. aufsetzbar ist, das in Längsrichtung der Aufnahmeschiene kraft-und/oder formschlüssig gehalten ist und eine Abdeckung für die Befestigungsschrauben bildet.

Dabei kann das Halteelement beispielsweise steck-schiebeartig in die Aufnahmeschiene einsetzbar sein. Zur beidseitigen Abstützung der Aufnahmeschiene an dem Dach-, Wand-und Fassadenelement kann dieselbe im Querschnitt im Wesentlichen ein nach unten offenes Trapez bilden, das eine entsprechend profilierte Rippe der Außenschale der Dach-, Wand- und Fassadenelemente übergreift, wobei die Innenseiten der seitlichen Schenkel und des zwischen den seitlichen Schenkeln verlaufenden Verbindungssteges an der Rippe im wesentlichen formschlüssig anliegen.

Bei einer einseitigen Abstützung der Aufnahmeschiene an dem Dach-, Wand- und Fassadenelement hingegen kann dieselbe im Querschnitt im wesentlichen L-förmig ausgebildet sein, wobei zwischen dem langen Schenkel und dem kurzen Schenkel der Aufnahmeschiene ein stumpfer Winkel gebildet ist, der lange Schenkel auf der Oberseite der profilierte Rippe der Außenschale der Dach-, Wand- und Fassadenelemente aufliegt und der kurze Schenkel mit seiner Innenseite an einer der schrägen Seiten der Rippe im wesentlichen formschlüssig anliegt.

An der Außenseite des Verbindungssteges des nach unten offenen Trapezes bzw. an der Außenseite des langen Schenkels kann mindestens eine in Längsrichtung der Aufnahmeschiene verlaufende Aufnahmeleiste einstückig angeformt sein, in der bzw. in denen jeweils ein Raster von L-oder T-förmigen Ausschnitten vorgesehen ist, wobei jeweils in dem zwischen der freien Kante der Aufnahmeleiste bzw. der Aufnahmeleisten und der Außenseite des Verbindungssteges bzw. der Außenseite des langen Schenkels parallel verlaufenden Schlitz der Ausschnitte Stege des Haltelementes eingreifen. Das Vorsehen von T-förmigen Ausschnitten hat den Vorteil, dass bei zwei mit Abstand zueinander angeordneten Aufnahmeschienen insbesondere mit L-förmigen Querschnitt diese so zueinander montiert werden können, dass jeweils die an den schrägen Seiten der Rippe anliegenden kurzen Schenkel entweder zueinander gerichtet sind oder auch voneinander weg gerichtet sind.

Um eine Aufsetzhilfe für das Anbauteil bzw. die Halteelemente zu erreichen, kann an der Aufnahmeleiste bzw. an mindestens einer der Aufnahmeleisten eine schräg nach außen gerichtete Führungsleiste einstückig angeformt sein, in der jeweils der sich rechtwinklig zu dem Verbindungssteg verlaufende Schlitz der Ausschnitte ausläuft. Insbesondere bei dieser Ausführung ist die zuvor beschriebene Montage mit den T-förmigen Ausschnitten erforderlich. Die T-förmigen Ausschnitte sorgen dafür, dass keine unterschiedlichen Aufnahmeschienen benötigt werden, wobei die Führungsleisten für ein Hineingleiten der Halteelemente in die Aufnahmeschienen sorgen.

An der Außenseite des Verbindungssteges des nach unten offenen Trapezes kann in mindestens einer Reihe jeweils ein Raster hakenförmiger Ansätze einstückig angeformt sein, wobei die freien Schenkel der Ansätze in Längsrichtung der Aufnahmeschiene gerichtet sind und in zwischen der Außenseite des Verbindungssteges und den parallel zu der Außenseite des Verbindungssteges verlaufenden freien Schenkeln der hakenförmigen Ansätze gebildeten Schlitze Stege des Haltelementes eingreifen.

Am vorderen Ende der langen Schenkel der hakenförmigen Ansätze können zur Außenseite des Verbindungssteges des nach unten offenen Trapezes gerichtete Rastnasen einstückig angeformt sein, die die Stege des Halteelementes gegen Verschiebung o.dgl. sichern.

Es können aber auch an der Außenseite des Verbindungssteges des nach unten offenen Trapezes zwei in Längsrichtung parallel verlaufende L-förmige Ansätze einstückig an den Verbindungssteg angeformt sein, wobei die freien Enden der freien Schenkel der beiden L-förmigen Ansätze zueinander gerichtet sind und in zwischen der Außenseite des Verbindungssteges und den parallel zu der Außenseite des Verbindungssteges verlaufenden freien Schenkeln der L-förmigen Ansätze gebildeten Nuten Stege des Haltelementes eingreifen.

Alternativ können an der Außenseite des Verbindungssteges des nach unten offenen Trapezes zwei in Längsrichtung parallel verlaufende L-förmige Ansätze einstückig an den Verbindungssteg angeformt sein, wobei die freien Enden der freien Schenkel der beiden L-förmigen Ansätze voneinander weg gerichtet sind und in zwischen der Außenseite des Verbindungssteges und den parallel zu der Außenseite des Verbindungssteges verlaufenden freien Schenkeln der L-förmigen Ansätze gebildeten Nuten Stege des Haltelementes eingreifen.

Die parallel verlaufenden L-förmigen Ansätze beider Varianten weisen ein Raster von Ausschnitten auf, über die die korrespondierenden Stege des Halteelementes von oben in die Aufnahmeschiene einsetzbar sind. Dieses Raster von Ausschnitten gewährleistet, dass das Haltetelement nicht über die gesamte Länge der Aufnahmeschiene sondern lediglich über ein relativ kurzes Teilstück geschoben werden muss, wobei ein sicherer Halt jederzeit gewährleistet ist.

Hierbei ist es erforderlich, dass an dem unteren Ende der Aufnahmeschiene ein Haltewinkel als Endanschlag für das Halteelement vorgesehen ist.

Das Halteelement kann aber auch mittels auf die Ausnahmeschiene aufsetzbaren und auf derselben verschiebbar geführten Klemmelementen gehalten sein.

Dabei bildet die Aufnahmeschiene ebenfalls ein im Querschnitt im wesentlichen nach unten offenes Trapez, das eine entsprechend profilierte Rippe der Außenschale der Dach-, Wand- und Fassadenelemente übergreift, wobei aber die Innenseiten der seitlichen Schenkel von den Seiten der Rippe beabstandet sind. Die im Querschnitt im Wesentlichen ein nach unten offenes Trapez bildenden Klemmelemente umgreifen mit ihren umgebogenen freien Enden die freien Enden der seitlichen Schenkel der Aufnahmeschiene. Mit sich im Inneren der Klemmelemente einstückig angeformten Stegen stützen sich die Klemmelemente auf der Außenseite des Verbindungssteges der Aufnahmeschiene ab, wobei mindestens eine an dem Verbindungssteg einstückig angeformte Haltelasche an einem parallel dazu verlaufenen Zwischensteg des Halteelementes angreift und das Halteelement sowie die Aufnahmeschiene miteinander verspannt.

Zum Aufsetzen der Klemmelemente auf die Aufnahmeschiene sind in den seitlichen Schenkeln der Aufnahmeschiene Ausnehmungen vorgesehen, durch die ein Aufschieben der Klemmelemente über die gesamte Länge der Aufnahmeschiene vermieden wird.

Nachfolgend werden anhand der Zeichnungen Ausführungsbeispiele der Vorrichtung näher erläutert.

Es zeigen
- **Fig. 1**: eine Querschnittsdarstellung eines ersten Ausführungsbeispiels der Vorrichtung,
- **Fig. 2**: eine perspektivische Darstellung der Vorrichtung nach **Fig. 1** mit gesprengt dargestelltem Halteelement,
- **Fig. 3**: die perspektivische Darstellung nach **Fig. 2** mit auf die Aufnahmeschiene aufgesetztem und verriegeltem Halteelement,
- **Fig. 4**: eine Querschnittsdarstellung eines zweiten Ausführungsbeispiels der Vorrichtung,
- **Fig. 5**: eine perspektivische Darstellung der Vorrichtung nach **Fig. 4** mit gesprengt dargestelltem Haltelement,
- **Fig. 6**: die perspektivische Darstellung nach **Fig. 5** mit auf die Aufnahmeschiene aufgesetztem und verriegeltem Halteelement,
- **Fig. 7**: eine Querschnittsdarstellung eines dritten Ausführungsbeispiels der Vorrichtung,
- **Fig. 8**: eine perspektivische Darstellung der Vorrichtung nach **Fig. 7** mit gesprengt dargestelltem Halteelement und L-förmigen Ausschnitten in der Aufnahmeschiene,
- **Fig. 9**: die perspektivische Darstellung nach **Fig. 8** mit auf die Aufnahmeschiene aufgesetztem und verriegeltem Halteelement,
- **Fig. 10**: eine perspektivische Darstellung der Vorrichtung nach **Fig. 7** mit gesprengt dargestelltem Halteelement und T-förmigen Ausschnitten in der Aufnahmeschiene,
- **Fig. 11**: die perspektivische Darstellung nach **Fig. 10** mit auf die Aufnahmeschiene aufgesetztem und verriegeltem Halteelement,
- **Fig. 12**: eine Querschnittsdarstellung eines vierten Ausführungsbeispiels der Vorrichtung,
- **Fig. 13**: eine perspektivische Darstellung der Vorrichtung nach **Fig. 12** mit gesprengt dargestelltem Halteelement,
- **Fig. 14**: die perspektivische Darstellung nach **Fig. 5** mit auf die Aufnahmeschiene aufgesetztem und verriegeltem Halteelement,
- **Fig. 15**: eine Querschnittsdarstellung eines fünften Ausführungsbeispiels der Vorrichtung,
- **Fig. 16**: eine perspektivische Darstellung der Vorrichtung nach **Fig. 15** mit gesprengt dargestelltem Halteelement,
- **Fig. 17**: die perspektivische Darstellung nach **Fig. 15** mit auf die Aufnahmeschiene aufgesetztem und verriegeltem Halteelement,
- **Fig. 18**: eine Querschnittsdarstellung eines sechsten Ausführungsbeispiels der Vorrichtung,
- **Fig. 19**: eine perspektivische Darstellung der Vorrichtung nach **Fig. 18** mit zwei auf die Aufnahmeschiene aufgesetzten Halteelementen, wobei eines der beiden Halteelemente über ein Klemmelement mit der Aufnahmeschiene verriegelt ist und das andere Halteelement von dem einen Klemmelement noch beabstandet ist,
- **Fig. 20**: die perspektivische Darstellung nach **Fig. 19** nach dem das andere Halteelement ebenfalls über das Klemmelement mit der Aufnahmeschiene verriegelt ist,
- **Fig. 21**: eine perspektivische Darstellung der Vorrichtung nach **Fig. 18** mit auf die Aufnahmeschiene aufgesetztem und verriegeltem Halteelement am freien Ende der Vorrichtung und
- **Fig. 22**: eine perspektivische Darstellung eines Klemmelementes.

Die in den **Figuren** dargestellte Vorrichtung 1 ist zur Anordnung von Anbauteilen, wie beispielsweise Solarmodulen oder sonstiges, an an bzw. auf einer Unterkonstruktion (nicht dargestellt) befestigten Dach-, Wand-und Fassadenelementen 2 vorgesehen. Dabei sind die Dach-, Wand- und Fassadenelemente 2 vorzugsweise als Sandwichelemente ausgebildet, die einen Kern aus Kunstoff-Hartschaum oder Mineralwolle, einer profilierten Außenschale 3 aus Stahlblech und einer profilierten oder glatten Innenschale aus Stahlblech aufweisen. In den **Figuren** ist das Sandwichelement vereinfacht dargestellt, wobei lediglich die profilierte Außenschale 3 des Sandwichelementes gezeigt ist. Die Vorrichtung 1 ist nicht nur für Sandwichelemente vorgesehen, sondern kann auch an die unterschiedlichsten Fassaden und Dacheindeckungen angebracht werden.

Die Vorrichtung 1 besteht im Wesentlichen aus mindestens einer Aufnahmeschiene 4 und mindestens einem in bzw. auf die Aufnahmeschiene 4 ein- bzw. aufsetzbaren Halteelement 5. Die Aufnahmeschiene 4 erstreckt sich vorzugsweise über die gesamte Länge des Sandwichelementes und wird gemeinsam mit dem jeweiligen Sandwichelement mittels deren Befestigungsschrauben 6 an der Unterkonstruktion verschraubt. In Längsrichtung der Aufnahmeschiene 4 wird das mit dem jeweiligen Anbauteil verbundene Haltelement 5 mit Aufnahmeschiene 4 kraft-und/oder formschlüssig gehalten, wobei das Halteelement 5 gleichzeitig eine Abdeckung für die Befestigungsschrauben 6 bildet.

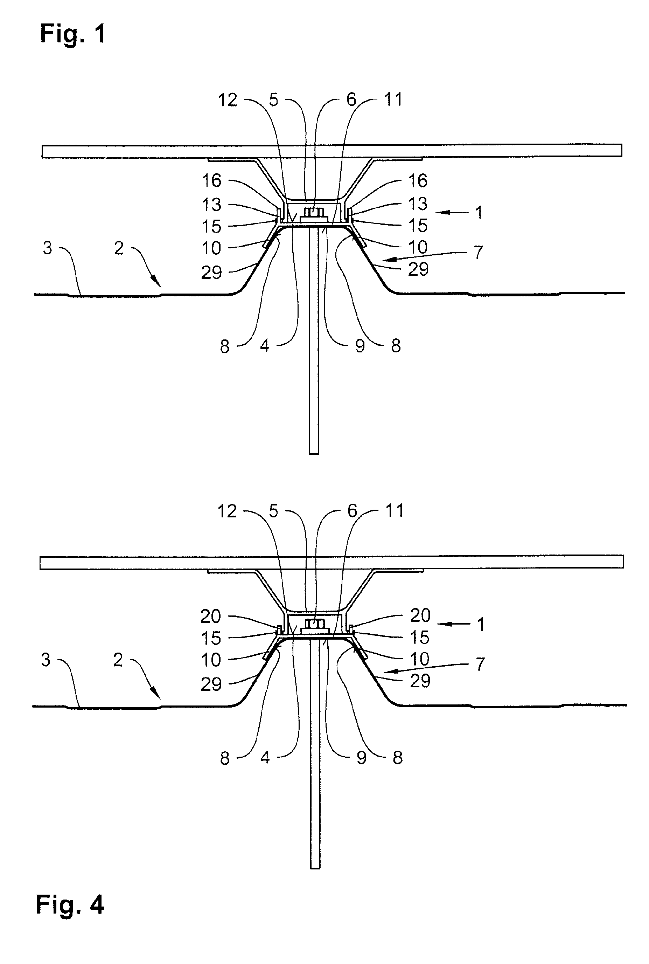

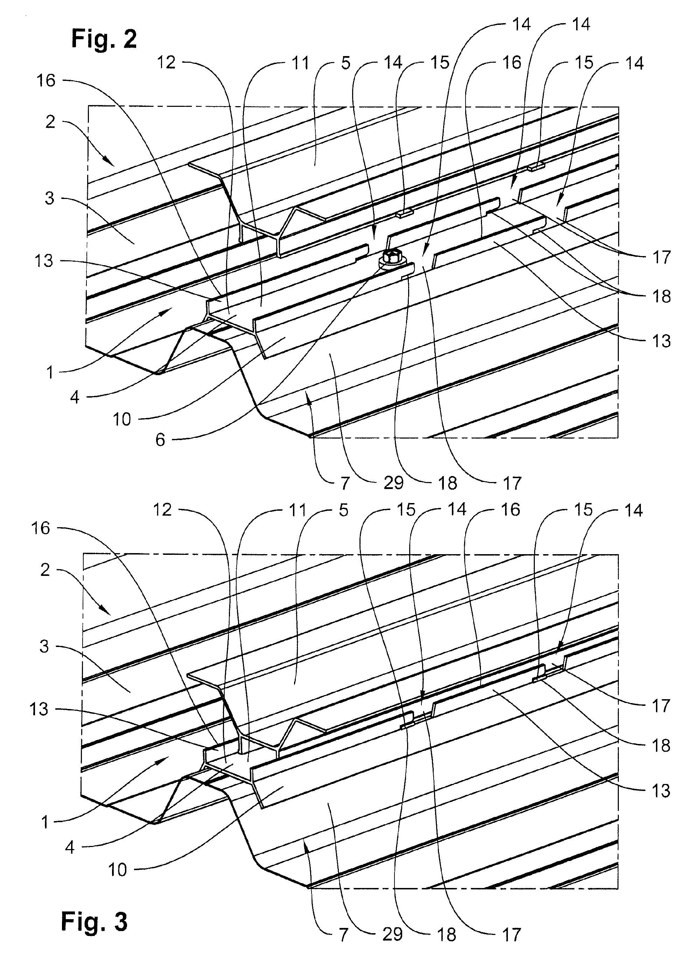

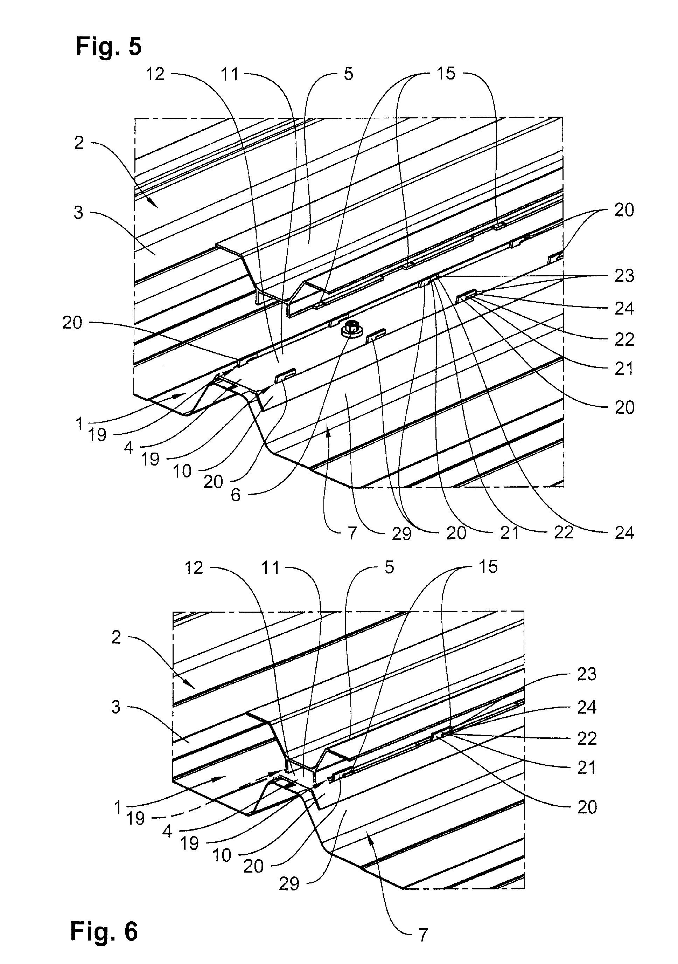

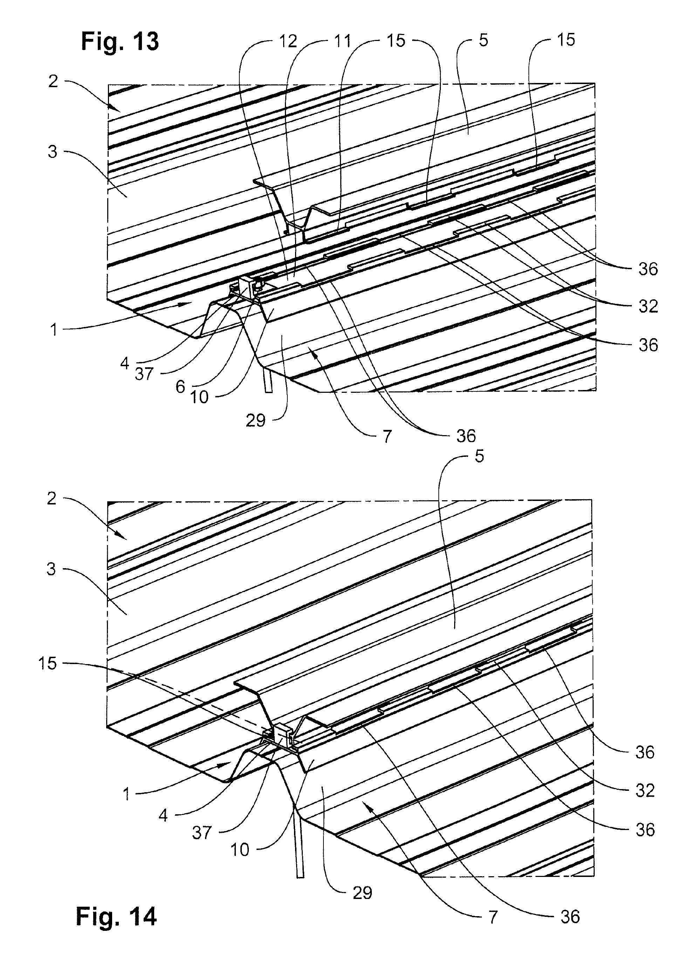

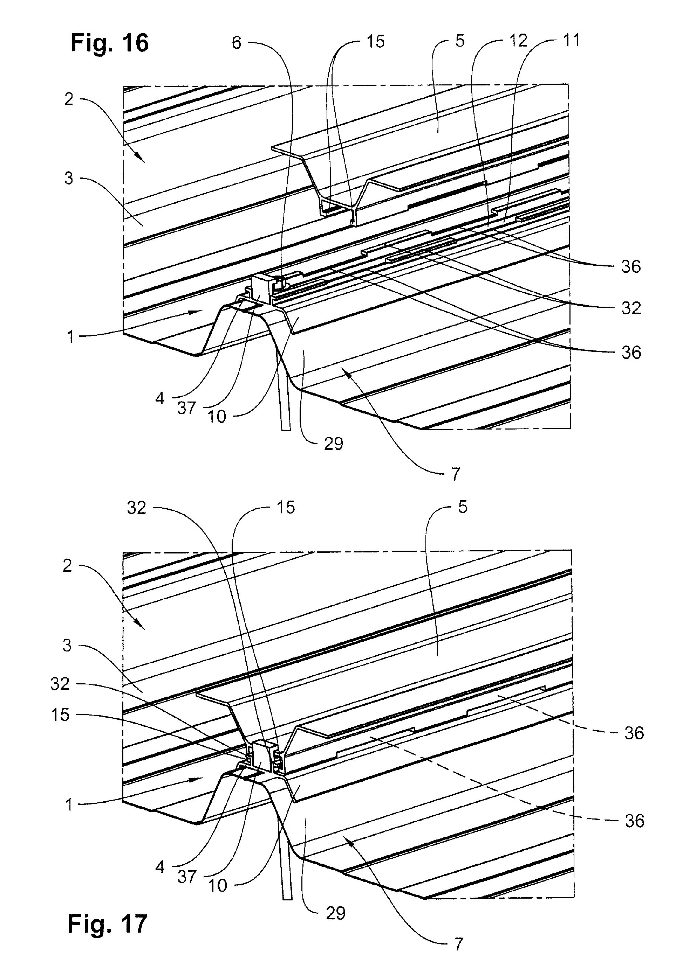

Bei den Vorrichtungen 1 nach den **Fign. 1** bis **17** ist das Halteelement 5 im Wesentlichen steck-schiebeartig in die Aufnahmeschiene 4 eingesetzt.

Die Aufnahmeschienen 4 der Vorrichtungen 1 in den in **Fign. 1** bis **6** und **12** bis **17** dargestellten Ausführungsbeispielen bilden vorzugsweise im Querschnitt im Wesentlichen ein nach unten offenes Trapez, das eine entsprechend profilierte Rippe 7 der Außenschale 3 der Dach-, Wand-und Fassadenelemente 2 übergreift. Die Innenseiten 8, 9 der seitlichen Schenkel 10 und des zwischen den seitlichen Schenkeln 10 verlaufenden Verbindungssteges 11 liegen dabei im wesentlichen formschlüssig an der Rippe 7 an.

Bei dem in den **Fign. 1** bis **3** dargestellten ersten Ausführungsbeispiel der Vorrichtung 1 sind an der Außenseite 12 des Verbindungssteges 11 des nach unten offenen Trapezes zwei voneinander beabstandete, parallel verlaufende Aufnahmeleisten 13 einstückig angeformt, in denen jeweils ein Raster von L-förmigen Ausschnitten 14 vorgesehen ist. Zur Gewichts- und Materialeinsparung kann beispielsweise je nach Gewicht des anzubringenden Anbauteils auch lediglich eine Aufnahmeleiste 13 an die Außenseite 12 des Verbindungssteges 11 angeformt sein (nicht dargestellt). Das Halteelement 5 hingegen weist an seinem zu der Aufnahmeschiene 4 gerichteten Ende eine Vielzahl von Stegen 15 auf, die beim Ein- bzw. Aufsetzen des Halteelementes 5 in bzw. auf die Aufnahmeschiene 4 über die sich von der freien Kante 16 der Aufnahmeleisten 13 zur Außenseite 12 des Verbindungssteges 11 erstreckenden Schlitze 17 der Ausschnitte 14 in die daran anschließenden zwischen der freien Kante 16 der Aufnahmeleisten 13 und der Außenseite 12 des Verbindungssteges 11 parallel verlaufenden Schlitzen 18 der Ausschnitte 14 eingeschoben werden und das Halteelement 5 mit der Aufnahmeschiene 4 verriegeln.

Die L- förmigen Ausschnitte 14 können auch T-förmig ausgebildet sein (nicht dargestellt), wodurch die Montage der Aufnahmeschiene 4 insofern vereinfacht wird, da nicht auf die Richtung der parallel verlaufenden Schlitze 18 der Ausschnitte 14 geachtet werden muss.

Das in den **Fign. 4** bis **6** dargestellte Ausführungsbeispiel der Vorrichtung 1 zeigt an der Außenseite 12 des Verbindungssteges 11 des nach unten offenen Trapezes in zwei parallelen Reihen 19 jeweils ein Raster hakenförmiger Ansätze 20, die vorzugsweise einstückig an die Außenseite 12 des Verbindungssteges 11 angeformt sind. Auch hier kann je nach Anbauteil zur Vereinfachung bzw. Einsparung lediglich in einer einzelnen Reihe 19 ein Raster hakenförmiger Ansätze 20 an die Außenseite 12 des Verbindungssteges 11 angeformt sein (ebenfalls nicht dargestellt). Die freien Schenkel 21 der Ansätze sind in Längsrichtung der Aufnahmeschiene 4 gerichtet. Auch hier weist das Halteelement 5 an seinem zu der Aufnahmeschiene 4 gerichteten Ende eine Vielzahl von Stegen 15 auf, die nach Ein- bzw. Aufsetzen des Halteelementes 5 in bzw. auf die Aufnahmeschiene 4 und dem Verschieben des Halteelementes 5 in Längsrichtung in zwischen der Außenseite 12 des Verbindungssteges 11 und den parallel zu der Außenseite 12 des Verbindungssteges 11 verlaufenden freien Schenkeln 21 der hakenförmigen Ansätze 20 gebildeten Schlitze 22 eingreifen und gehalten sind.

Für einen sicheren Halt der Stege 15 in den Schlitzen 22 bzw. des Halteelementes 5 an der Aufnahmeschiene 4 können am vorderen Ende 23 der freien Schenkel 21 der hakenförmigen Ansätze 20 zur Außenseite 12 des Verbindungssteges 11 des nach unten offenen Trapezes gerichtete Rastnasen 24 einstückig angeformt sein, die ein Herausrutschen der Stege 15 aus den Schlitzen 22 verhindern.

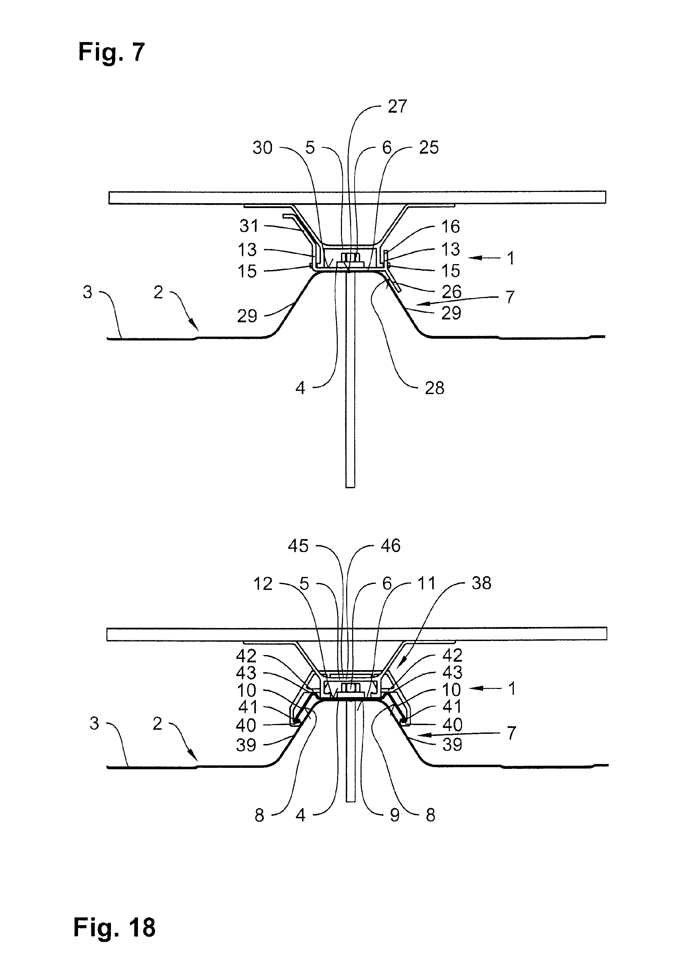

Bei dem in den **Fign. 7** bis **11** dargestellten Ausführungsbeispiel der Vorrichtung 1 ist die Aufnahmeschiene 4 im Querschnitt im Wesentlichen L-förmig ausgebildet. Zwischen dem langen Schenkel 25 und dem kurzen Schenkel 26 der Aufnahmeschiene 4 ist ein stumpfer Winkel gebildet. Dabei liegt der lange Schenkel 25 an der Oberseite 27 der profilierten Rippe 7 der Außenschale 3 der Dach-, Wand- und Fassadenelemente 2 auf und der kurze Schenkel 26 mit seiner Innenseite 28 an einer der schrägen Seiten 29 der Rippe 7 im wesentlichen formschlüssig an.

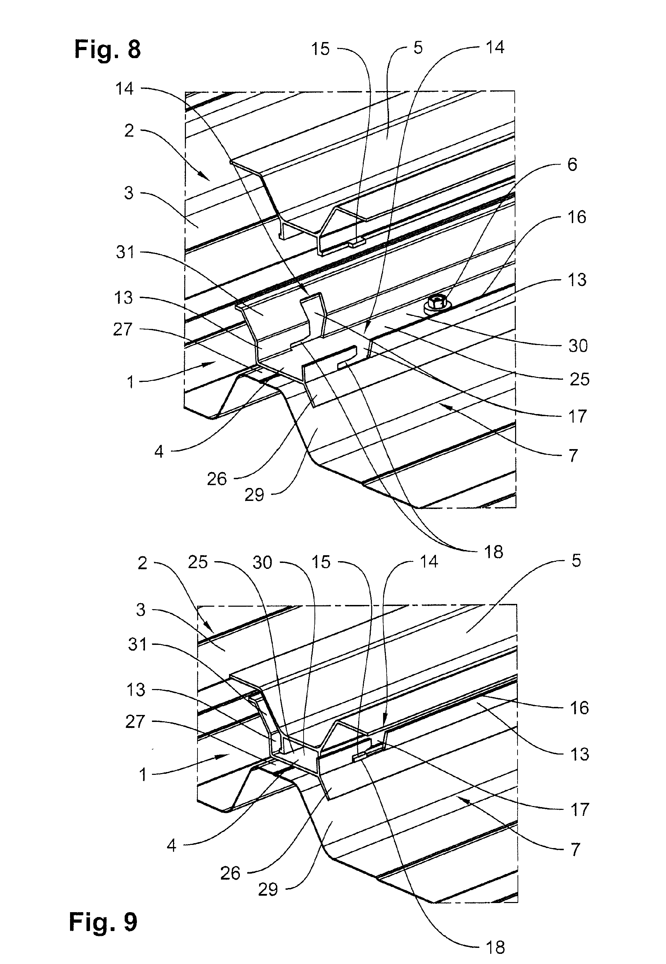

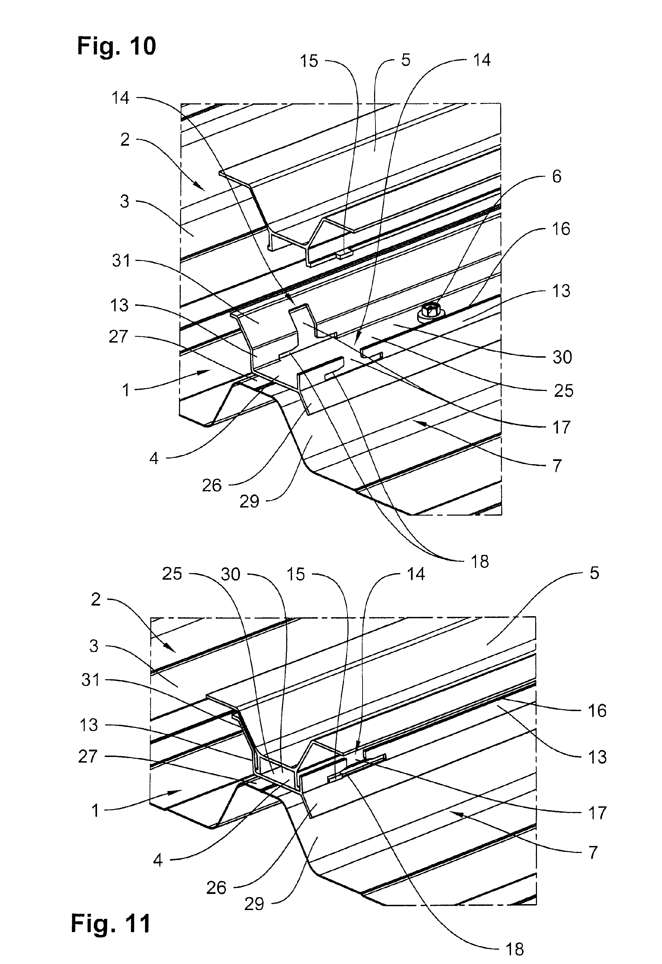

An der Außenseite 30 des langen Schenkels 25 sind auch hier zwei voneinander beabstandete, parallel verlaufende Aufnahmeleisten 13 einstückig angeformt, in denen jeweils das Raster von L-förmigen Ausschnitten 14 (siehe **Fig. 8** und **9**) oder T-förmigen Ausschnitten 14 (siehe **Fig. 10** und **11**) vorgesehen ist. An mindestens einer der Aufnahmeleisten 13 ist eine schräg nach außen gerichtete Führungsleiste 31 einstückig angeformt, die bei Verwendung von zwei parallelen Vorrichtungen 1 und seitenverkehrt zueinander montierten Aufnahmeschienen 4 als Einführhilfe für die Halteelemente 5 dienen.

Das Halteelement 5 weist ebenfalls an seinem zu der Aufnahmeschiene 4 gerichteten Ende eine Vielzahl von Stegen 15 auf, die beim Ein- bzw. Aufsetzen des Halteelementes 5 in bzw. auf die Aufnahmeschiene 4 über die sich von der freien Kante 16 der Aufnahmeleisten 13 bzw. aus etwa der Mitte der Führungsleiste 31 zur Außenseite 30 des langen Schenkels 25 erstreckenden Schlitze 17 der Ausschnitte 14 in die daran anschließenden parallel zu der Außenseite 30 des langen Schenkels 25 verlaufenden Schlitzen 18 der Ausschnitte 14 eingeschoben werden und das Halteelement 5 in der Aufnahmeschiene 4 halten.

Zu der Form der Ausschnitte 14 gilt das Gleiche wie bereits in dem Ausführungsbeispiel zu den **Fign. 1** bis **3** ausgeführt.

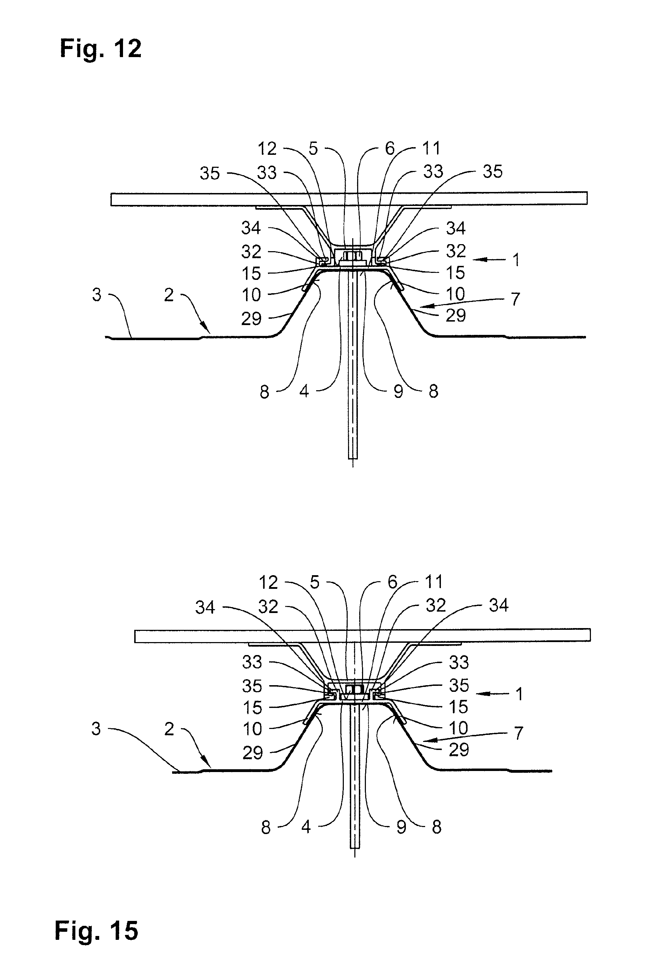

Das in den **Fign. 12** bis **14** dargestellte Ausführungsbeispiel zeigt an der Außenseite 12 des Verbindungssteges 11 des nach unten offenen Trapezes zwei einstückig an den Verbindungssteg 11 angeformte in Längsrichtung parallel verlaufende L-förmige Ansätze 32. Die freien Enden 33 der freien Schenkel 34 der beiden L-förmigen Ansätze 32 sind dabei zueinander gerichtet und in zwischen der Außenseite 12 des Verbindungssteges 11 und den parallel zu der Außenseite 12 des Verbindungssteges 11 verlaufenden Schenkeln 34 der L-förmigen Ansätze 32 gebildeten Nuten 35 greifen Stege 15 des Halteelementes 5 ein. Damit das Halteelement 5 beim Ein- bzw. Aufsetzen und Verriegeln nicht über die gesamte Länge der Aufnahmeschiene 4 geschoben werden muss, weisen die parallel verlaufenden L-förmigen Ansätze 32 ein Raster von Ausschnitten 36 auf, über die die korrespondierenden Stege 15 des Halteelementes 5 vorzugsweise von oben in die Aufnahmeschiene 4 ein- bzw. aufsetzbar sind, woraufhin durch ein relativ kurzes Verschieben des Halteelements 5 in Längsrichtung der Aufnahmeschiene 4 das Halteelement 5 in der Aufnahmeschiene 4 gehalten wird.

Damit das Halteelement 5 nicht aus der Aufnahmeschiene 4 herausrutschen kann, ist mindestens an einem Ende der Aufnahmeschiene 4 ein Haltewinkel 37 als Endanschlag für das Halteelement 5 vorgesehen.

In Abwandlung zu dem Ausführungsbeispiel nach den **Fign. 12** bis **14** sind bei dem Ausführungsbeispiel nach den **Fign. 15** bis **17** die freien Enden 33 der freien Schenkel 34 der beiden L-förmigen Ansätze 32 voneinander weg gerichtet. Als Folge davon verlaufen die in zwischen der Außenseite 12 des Verbindungssteges 11 und den parallel zu der Außenseite 12 des Verbindungssteges 11 verlaufenden Schenkeln 34 der L-förmigen Ansätze 32 gebildeten Nuten 35 eingreifenden Stege 15 des Halteelements 5 zwangläufig genau entgegengesetzt, d.h. die freien Enden der Stege 15 sind zueinander gerichtet.

Bei dem Ausführungsbeispiel der in den **Fign. 18** bis **22** dargestellten Vorrichtung 1 ist das Halteelement 5 mittels auf die Aufnahmeschiene 4 aufsetzbaren und auf derselben verschiebbar geführten Klemmelementen 38 gehalten. Die Aufnahmeschiene 4 bildet auch hier ein im Querschnitt im Wesentlichen nach unten offenes Trapez, das eine entsprechend profilierte Rippe 7 der Außenschale 3 der Dach-, Wand- und Fassadenelemente 2 übergreift. Entgegen den bisher beschriebenen Ausführungsbeispielen sind die Innenseiten 8 der seitlichen Schenkel 10 von den Seiten 39 der Rippe 7 beabstandet.

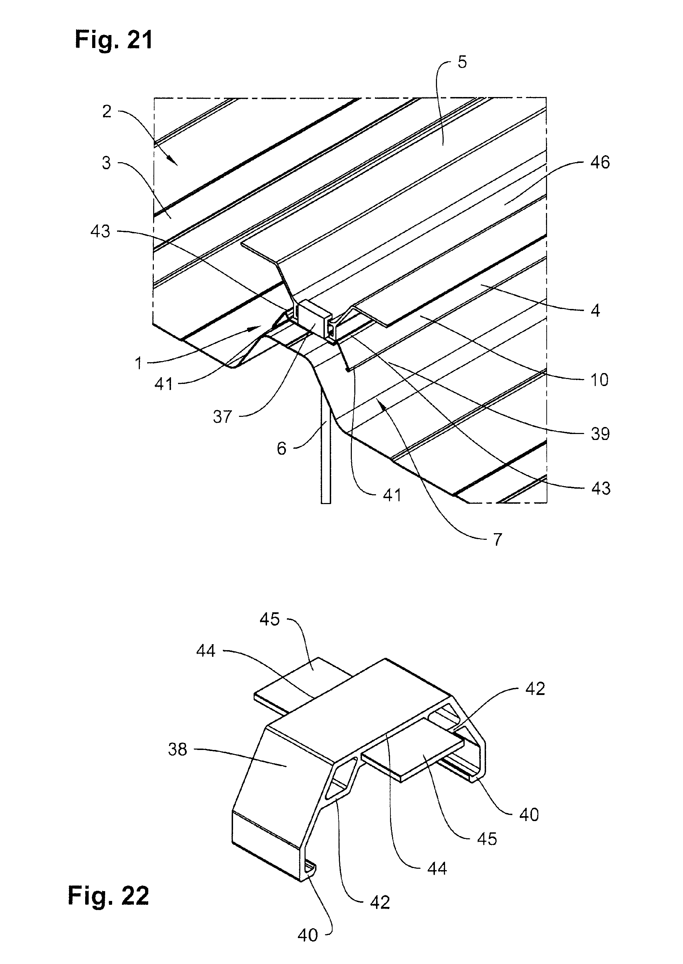

Auch die Klemmelemente 38 bilden im Querschnitt im Wesentlichen ein nach unten offenes Trapez (siehe insbesondere **Fig. 22**), das mit seinen umgebogenen freien Enden 40 die freien Enden 41 der seitlichen Schenkel 10 der Aufnahmeschiene 4 umgreift. Dabei stützen sich mit im Inneren der Klemmelemente 38 einstückig angeformte Stege 42 auf der Außenseite 12 des Verbindungssteges 11 der Aufnahmeschiene 4 bzw. auf in Längsrichtung des Verbindungssteges 11 eingeformten Sicken 43 ab. Mindestens eine an den Enden 44 der Klemmelemente 38 einstückig angeformte Haltelasche 45 (in den **Fign**. zwei Haltelaschen 45 dargestellt) greift an einem parallel dazu verlaufenen Zwischensteg 46 des Halteelementes 5 an und verspannt das Halteelement 5 sowie die Aufnahmeschiene 4 miteinander.

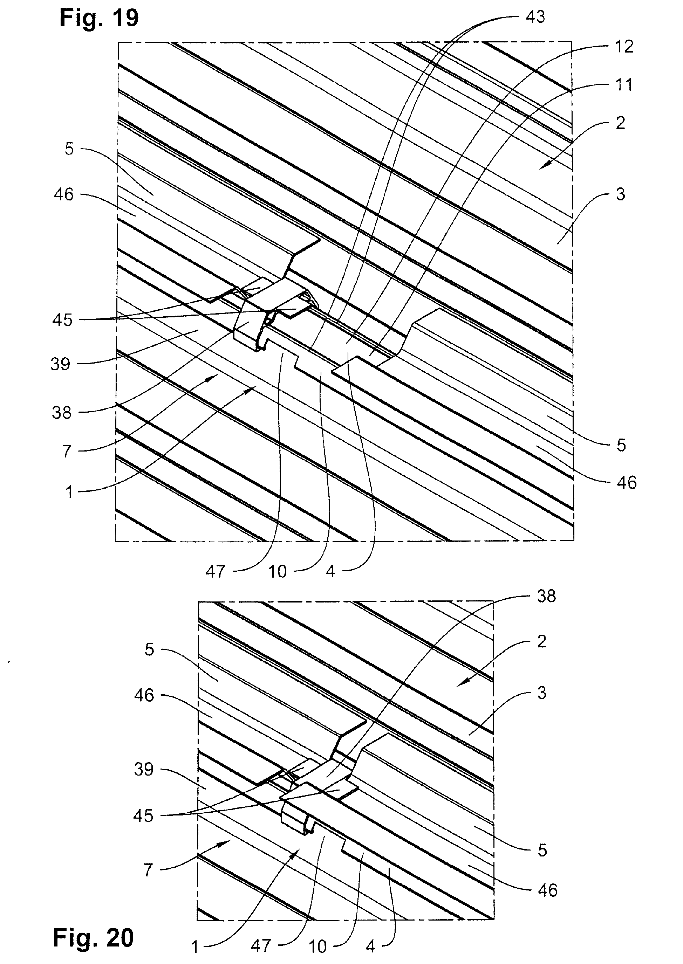

Zum Ein- bzw. Aufsetzen des bzw. der Klemmelemente 38 auf die Aufnahmeschiene 4 sind in den seitlichen Schenkeln 10 derselben Ausnehmungen 47 vorgesehen (siehe **Fig. 19** und **20**). Diese Ausnehmungen 47 sorgen dafür, dass die Klemmelemente 38 einfach an mehreren Stellen der Aufnahmeschiene 4 auf dieselbe gesteckt werden kann und nicht über die gesamte Aufnahmeschiene 4 geschoben werden müssen.

Wie in den **Fig. 19** und **20** dargestellt kann ein einzelnes Klemmelement 38 mit zwei Haltelaschen 45 auch zwei in Längsrichtung benachbarte Halteelemente 5 auf der Aufnahmeschiene 4 klemmen.

Auch hier ist mindestens an einem Ende der Aufnahmeschiene 4 der Haltewinkel 37 als Endanschlag für das bzw. die Halteelemente 5 vorgesehen (siehe **Fig. 21**).

## Patentansprüche

1. Vorrichtung (1) zur Anordnung von Anbauteilen an an bzw. auf einer Unterkonstruktion befestigten Dach-, Wand- und Fassadenelementen (2), wobei die Dach-, Wand- und Fassadenelemente vorzugsweise als Sandwichelemente mit einem Kern aus Kunststoff-Hartschaum oder Mineralwolle, einer profilierten Außenschale (3) aus Stahlblech und einer profilierten oder glatten Innenschale aus Stahlblech ausgebildet sind,
**dadurch gekennzeichnet,**
**dass** die Vorrichtung (1) aus mindestens einer sich vorzugsweise über die gesamte Länge des Sandwichelementes erstreckenden Aufnahmeschiene (4) besteht, die gemeinsam mit dem jeweiligen Sandwichelement mittels deren Befestigungsschrauben (6) an der Unterkonstruktion verschraubt ist, wobei in bzw. auf die Aufnahmeschiene (4) mindestens ein mit dem jeweiligen Anbauteil verbundenes Halteelement (5) ein- bzw. aufsetzbar ist, das in Längsrichtung der Aufnahmeschiene (4) kraft- und/oder formschlüssig gehalten ist und eine Abdeckung für die Befestigungsschrauben (6) bildet.

2. Vorrichtung nach Anspruch 1,
**dadurch gekennzeichnet,**
**dass** das Halteelement (5) steck-schiebeartig in die Aufnahmeschiene (4) einsetzbar ist.

3. Vorrichtung nach Anspruch 1 oder 2,
**dadurch gekennzeichnet,**
**dass** die Aufnahmeschiene (4) im Querschnitt im Wesentlichen ein nach unten offenes Trapez bildet, das eine entsprechend profilierte Rippe (7) der Außenschale (3) der Dach-, Wand- und Fassadenelemente (2) übergreift, wobei die Innenseiten (8, 9) der seitlichen Schenkel (10) und des zwischen den seitlichen Schenkeln (10) verlaufenden Verbindungssteges (11) an der Rippe (7) im wesentlichen formschlüssig anliegen.

4. Vorrichtung nach Anspruche 1 oder 2,
**dadurch gekennzeichnet,**
**dass** die Aufnahmeschiene (4) im Querschnitt im Wesentlichen L-förmig ausgebildet ist, wobei zwischen dem langen Schenkel (25) und dem kurzen Schenkel (26) der Aufnahmeschiene (4) ein stumpfer Winkel gebildet ist, der lange Schenkel (25) auf der Oberseite (27) der profilierten Rippe (7) der Außenschale (3) der Dach-, Wand- und Fassadenelemente (2) aufliegt und der kurze Schenkel (26) mit seiner Innenseite (28) an einer der schrägen Seiten (29) der Rippe (7) im wesentlichen formschlüssig anliegt.

5. Vorrichtung nach einem der Ansprüche 1 bis 4,
**dadurch gekennzeichnet,**
**dass** an der Außenseite (12) des Verbindungssteges (11) des nach unten offenen Trapezes bzw. an der Außenseite (30) des langen Schenkels (25) mindestens eine in Längsrichtung der Aufnahmeschiene (4) verlaufende Aufnahmeleiste (13) einstückig angeformt ist, in der bzw. in denen jeweils ein Raster von L- oder T-förmigen Ausschnitten (14) vorgesehen ist, wobei jeweils in dem zwischen der freien Kante (16) der Aufnahmeleiste (13) bzw. der Aufnahmeleisten (13) und der Außenseite (12) des Verbindungssteges (11) bzw. der Außenseite (30) des langen Schenkels (25) parallel verlaufenden Schlitz (18) der Ausschnitte (14) Stege (15) des Halteelementes (5) eingreifen.

6. Vorrichtung nach Anspruch 5,
**dadurch gekennzeichnet,**
**dass** an der Aufnahmeleiste (13) bzw. an mindestens einer der Aufnahmeleisten (13) eine schräg nach außen gerichtete Führungsleiste (31) einstückig angeformt ist, in der jeweils der rechtwinklig zu dem Verbindungssteg (11) verlaufende Schlitz (17) der Ausschnitte (14) ausläuft.

7. Vorrichtung nach einem der Ansprüche 1 bis 4,
**dadurch gekennzeichnet,**
**dass** an der Außenseite (12) des Verbindungssteges (11) des nach unten offenen Trapezes in mindestens einer Reihe (19) jeweils ein Raster hakenförmiger Ansätze (20) einstückig angeformt ist, wobei die freien Schenkel (21) der Ansätze (20) in Längsrichtung der Aufnahmeschiene (4) gerichtet sind und in zwischen der Außenseite (12) des Verbindungssteges (11) und den parallel zu der Außenseite (12) des Verbindungssteges (11) verlaufenden freien Schenkeln (21) der hakenförmigen Ansätze (20) gebildeten Schlitze (22) Stege (15) des Haltelementes (5) eingreifen.

8. Vorrichtung nach Anspruch 7,
**dadurch gekennzeichnet,**
**dass** am vorderen Ende (23) der freien Schenkel (21) der hakenförmigen Ansätze (20) zur Außenseite (12) des Verbindungssteges (11) des nach unten offenen Trapezes gerichtete Rastnasen (24) einstückig angeformt sind.

9. Vorrichtung nach einem der Ansprüche 1 bis 4,
**dadurch gekennzeichnet,**
**dass** an der Außenseite (12) des Verbindungssteges (11) des nach unten offenen Trapezes zwei in Längsrichtung parallel verlaufende L-förmige Ansätze (32) einstückig an den Verbindungssteg (11) angeformt sind, wobei die freien Enden (33) der freien Schenkel (34) der beiden L-förmigen Ansätze (32) zueinander gerichtet sind und in zwischen der Außenseite (12) des Verbindungssteges (11) und den parallel zu der Außenseite (12) des Verbindungssteges (11) verlaufenden freien Schenkeln (34) der L-förmigen Ansätze (32) gebildeten Nuten (35) Stege (15) des Halteelementes (5) eingreifen.

10. Vorrichtung nach einem der Ansprüche 1 bis 4,
**dadurch gekennzeichnet,**
**dass** an der Außenseite (12) des Verbindungssteges (11) des nach unten offenen Trapezes zwei in Längsrichtung parallel verlaufende L-förmige Ansätze (32) einstückig an den Verbindungssteg (11) angeformt sind, wobei die freien Enden (33) der freien Schenkel (34) der beiden L-förmigen Ansätze (32) voneinander weg gerichtet sind und in zwischen der Außenseite (12) des Verbindungssteges (11) und den parallel zu der Außenseite (12) des Verbindungssteges (11) verlaufenden freien Schenkeln (34) der L-förmigen Ansätze (32) gebildeten Nuten (35) Stege (15) des Halteelementes (5) eingreifen.

11. Vorrichtung nach Anspruch 9 oder 10,
**dadurch gekennzeichnet,**
**dass** die parallel verlaufenden L-förmigen Ansätze (32) ein Raster von Ausschnitten (36) aufweisen, über die die korrespondierenden Stege (15) des Halteelementes (5) von oben in die Aufnahmeschiene (4) einsetzbar sind.

12. Vorrichtung nach einem der Ansprüche 9 bis 11,
**dadurch gekennzeichnet,**
**dass** mindestens an einem Ende der Aufnahmeschiene (4) ein Haltewinkel (37) als Endanschlag für das Halteelement (5) vorgesehen ist.

13. Vorrichtung nach Anspruch 1,
**dadurch gekennzeichnet,**
**dass** das Halteelement (5) mittels auf die Aufnahmeschiene (4) aufsetzbaren und auf derselben verschiebbar geführten Klemmelementen (38) gehalten ist.

14. Vorrichtung nach Anspruch 1 oder 13,
**dadurch gekennzeichnet,**
**dass** die Aufnahmeschiene (4) ein im Querschnitt im wesentlichen nach unten offenes Trapez bildet, das eine entsprechend profilierte Rippe (7) der Außenschale (3) der Dach-, Wand- und Fassadenelemente (2) übergreift, wobei die Innenseiten (8) der seitlichen Schenkel (10) von den Seiten (39) der Rippe (7) beabstandet sind.

15. Vorrichtung nach Anspruch 13 oder 14,
**dadurch gekennzeichnet,**
**dass** die im Querschnitt im wesentlichen ein nach unten offenes Trapez bildenden Klemmelemente (38) mit ihren umgebogenen freien Enden (40) die freien Enden (41) der seitlichen Schenkel (10) der Aufnahmeschiene (4) umgreifen und sich mit im Inneren der Klemmelemente (38) einstückig angeformten Stegen (42) auf der Außenseite (12) des Verbindungssteges (11) der Aufnahmeschiene (4) abstützen, wobei mindestens eine an den Enden (44) der Klemmelemente (38) einstückig angeformte Haltelasche (45) an einem parallel dazu verlaufenen Zwischensteg (46) des Halteelementes (5) angreift und das Halteelement (5) sowie die Aufnahmeschiene (4) miteinander verspannt.

16. Vorrichtung nach einem der Ansprüche 13 bis 14,
**dadurch gekennzeichnet,**
**dass** in den seitlichen Schenkeln (10) der Aufnahmeschiene (4) Ausnehmungen (47) zum Aufsetzen der Klemmelemente (38) auf die Aufnahmeschiene (4) vorgesehen sind.
